# EUROPEAN PATENT SPECIFICATION

(11) **EP 3 709 154 B1**
(45) Date of publication and mention of the grant of the patent: **14.12.2022**
(21) Application number: 20158170.9
(22) Date of filing: 19.02.2020
(51) Int. Cl.: G06F 3/14

(54) **INSTALLATION SUPPORT, AND DISPLAY DEVICE**
INSTALLATIONSUNTERSTÜTZUNG UND ANZEIGEVORRICHTUNG
SUPPORT D'INSTALLATION ET DISPOSITIF D'AFFICHAGE

(30) Priority: 15.03.2019 CN 201920335063 U
(43) Date of publication of application: 16.09.2020
(73) Proprietor: Unilumin Group Co. Ltd., Shenzhen, Guangdong 518103 (CN)
(72) Inventor: Dai, Xiaotian, Shenzhen, Guangdong, 518103 (CN); Li, Jinxing, Shenzhen, Guangdong, 518103 (CN)
(74) Representative: Osterhoff, Utz

(56) References cited:
- CN-U- 207 514 532
- ES-U- 1 211 413

## Description

### TECHNICAL FIELD

The present disclosure relates to the technical field of display installation, in particular to an installation support and a display device.

### BACKGROUND

Relying on the booming of the LED (Light Emitting Diode) industry, increasing numbers of new types LED display screens are emerging in the market, including fixed screens, stage screens, rental screens and television screens. The rental screen makes its sales far ahead of other types of display screens, benefiting from its quick installation, disassembly and maintenance. Typically used in activities such as commercial publicity, stage leasing and etc, the rental screens can be lifted, installed on the ground or fixed. Customers have increasing demands for assembling multiple display screens in such industrial environment. It is of great importance that the operation experience in the left-right installation and the up-down installation between the box bodies when multiple display screens are assembled. An improved operation experience would induce a reduction in the labor force and the cost required for the display installation, and enables the display screens to compete and excel in the market. The display screen typically needs to be installed on the installation support. In order to splice multiple displays more conveniently, it is particularly important to control the weight of the installation support. A lighter weight of the installation support would ease the installation. Therefore, it is required an installation support with a lighter weight and a guaranteed strength.

ES 1211413 U (hereinafter D1) discloses a slider, motorized handheld slider with grips for photo and video cameras. As best understood, D1 relates to an slider serving to hold an apparatus/devices without any excessive support for sliding on rails driven by electric motors, which are used for the recording of cinematographic scenes where a rectilinear movement of the camera is required. In D1's disclosure, the first supporting beam nor the second supporting beam fails to be provided.

CN 207514532 U (hereinafter D2) discloses a support component for holding a display screen. As stated in the search report, D2 disclose frame parts which can be equated as truss structures. More specifically, D2 recites two supporting rods 9 which connects between the top frame 1 and bottom frame 2. Both of these supporting rods 9 are also connected with the side frame 3 respectively at one side through an arm component 10. One of the supporting rod 9 is perpendicular arranged to the arm component 10.

### SUMMARY

For above, it is essential to provide an installation support and a display device.

The present disclosure relates to an installation support, which includes at least two carbon-fiber vertical frames, and two aluminum-alloy horizontal frames. Each of the carbon-fiber vertical frames are spaced in sequence. One end of each carbon-fiber vertical frame is connected to one of the aluminum-alloy horizontal frames, and the other end of each carbon-fiber vertical frame is connected to the other aluminum-alloy horizontal frame, each of the aluminum-alloy horizontal frames includes a first frame, a second frame, a third frame, a first supporting beam and a second supporting beam. One end of the first frame is connected to one end of the second frame, and the other end of the first frame is connected to the third frame. An end of the second frame away from the first frame is connected to one carbon-fiber vertical frame, an end of the third frame away from the first frame is connected to another carbon-fiber vertical frame. An end of the first supporting beam is connected to a position of the first frame away from the second frame, and the other end of the first supporting beam is connected to a position of the second frame away from the first frame. An end of the second supporting beam is connected to a position of the first frame away from the third frame, and the other end of the second supporting beam is connected to a position of the third frame away from the first frame, the first supporting beam is arranged curved, bending towards a joint of the first frame and the second frame, the second supporting beam is arranged curved, bending towards a joint of the first frame and the third frame, the first supporting beam and the second supporting beam are interconnected through a horizontal beam at bending curves of the first supporting beam and the second supporting beam.

According to the installation supports, the aluminum-alloy horizontal frames of each installation support have the same strength in all directions, so that the aluminum-alloy horizontal frames are suitable for mounting heavy objects, and the aluminum-alloy horizontal frames are not easy to break due to gravity when mounting the heavy objects. Additionally, the manufacturing precision of aluminum-alloy materials is high, and the aluminum-alloy horizontal frames can be repeatedly processed to ensure the precision of the aluminum-alloy horizontal frames. When the two aluminum-alloy horizontal frames of the two installation supports are mounted, the two aluminum-alloy horizontal frames of the two installation supports can be more accurately matched with each other. The carbon-fiber vertical frame has higher strength in one direction, and the carbon-fiber vertical frame is configured for bearing the force exerted by one aluminum-alloy horizontal frame towards or away from the other aluminum-alloy horizontal frame, so that a good bearing effect is achieved. The weight of the carbon fiber is lower than that of the aluminum-alloy material, so that the overall weight of the installation support is lighter and the strength is higher.

In one embodiment, the carbon-fiber vertical frame is cylindrical.

In one embodiment, each of the aluminum-alloy horizontal frames defines at least two installation grooves corresponding one-to-one to the carbon-fiber vertical frames. One end of each carbon-fiber vertical frame is inserted into one of the installation grooves on one aluminum-alloy horizontal frame, and the other end of each carbon-fiber vertical frame is inserted into another one of the installation grooves of the other aluminum-alloy horizontal frame.

In one embodiment, each aluminum-alloy horizontal frame defines a groove.

n one embodiment, the groove is configured to receive a reinforcing rib, and two ends of the reinforcing rib are respectively connected to two side walls of the groove.

In one embodiment, a length of the first frame is greater than a width of the first frame, and a length direction of the first frame is perpendicular to a length direction of the carbon-fiber vertical frame.

In one embodiment, the installation support further includes a climbing frame. the climbing frame is respectively connected to at least two carbon-fiber vertical frames at positions away from ends of the carbon-fiber vertical frames.

In one embodiment, the climbing frame comprises frame body, a first connecting part and the second connecting part, one end of the frame body being connected with the first connecting part, the other end of the frame body being connected with the second connecting part, the first connecting part being connected with one of the carbon-fiber vertical frames, and the second connecting part being connected with another one of the carbon-fiber vertical frame.

In one embodiment, the first connecting part is provided with a first connecting hole and a first pin hole; the first pin hole is formed through the inner surface and the outer surface of the first connecting part, and is communicated with the first connecting hole; the second connecting part is formed with a second connecting hole and a second pin hole; the second pin hole is formed through the inner surface and the outer surface of the second connecting part, and is communicated with the second connecting hole; a first pin shaft is arranged in the first pin hole and a third pin hole; and a second pin shaft is arranged in the second pin hole and the fourth pin hole.

In one embodiment, the first pin shaft is abutted against the side wall of the first pin hole; the first pin shaft is abutted against the side wall of the third pin hole; the second pin shaft is abutted against the side wall of the second pin hole; and the second pin shaft is abutted against the side wall of the fourth pin hole.

In one embodiment, it further includes a fixing shaft. The carbon-fiber vertical frame defines a first through hole. The aluminum-alloy horizontal frame defines second through hole. The fixing shaft penetrates through the first through hole and the second through hole.

In one embodiment, each of the aluminum-alloy horizontal frames includes a supporting surface perpendicular to an axial direction of the carbon-fiber vertical frame, and the two supporting surfaces of the two aluminum-alloy horizontal frames are positioned in a same direction.

The present disclosure also provides a display device, which includes a display screen and an installation support as described above. The display screen is connected to the aluminum-alloy horizontal frame.

### BRIEF DESCRIPTION OF THE DRAWINGS

Fig. 1 is a perspective schematic diagram of an installation support according to one embodiment of the present disclosure;
Fig. 2 is an exploded schematic diagram of an installation support according to one embodiment of the present disclosure, shown in a perspective view;
Fig. 3 is a perspective structural diagram of an installation support according to another embodiment of the present disclosure, shown in one perspective;
Fig. 4 is a perspective structural diagram of an installation support according to some other embodiment of the present disclosure, shown in one perspective.

### DETAILED DESCRIPTION OF THE EMBODIMENTS

In order to facilitate the appreciation of the present disclosure, the present disclosure will be described in details with reference to the relevant drawings. the drawings illustrates a preferred embodiment of the present disclosure. However, the present disclosure can be implemented in many other different forms and therefore is not limited to the embodiments described herein. these embodiments are provided for a more thorough and comprehensive appreciation of the present disclosure.

Unless otherwise defined, all technical and scientific terms recited herein have a same meaning as commonly understood by those skilled in the art. the terminology used in the description of the present disclosure herein is only for illustrative purpose and thus not intended to limit the present disclosure. As recited herein, the term "and/or" includes any and all combinations of one or more related listed items.

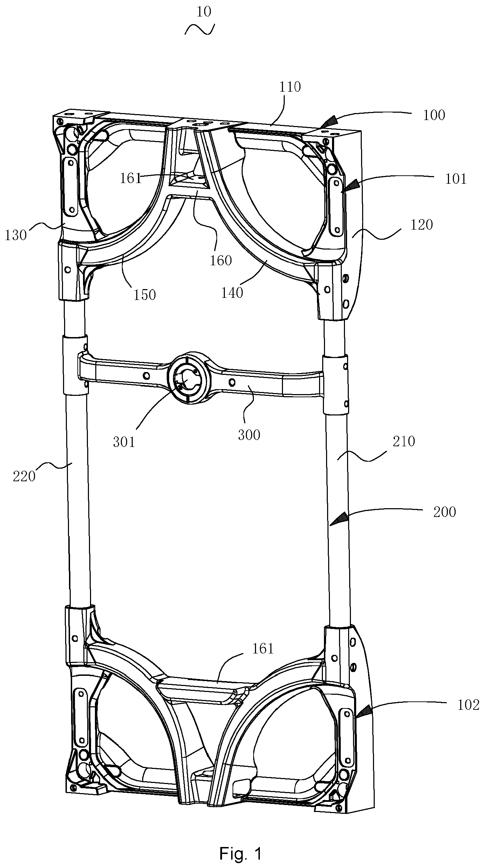

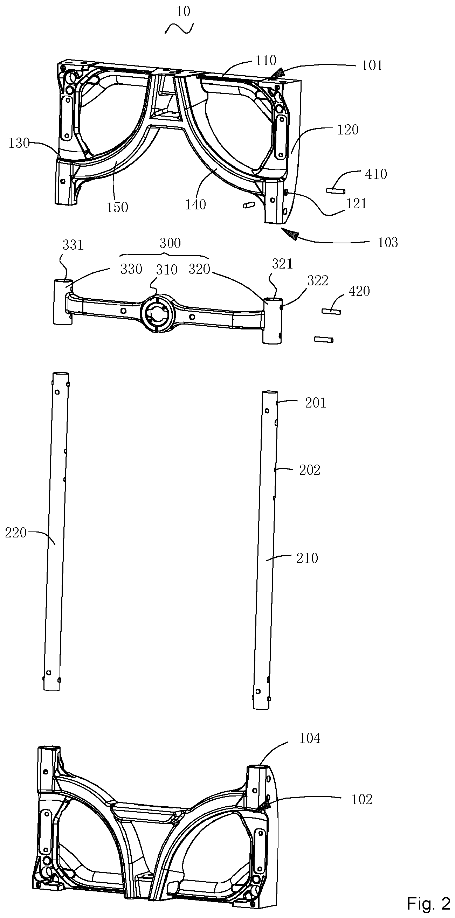

In order to provide an installation support which is light in weight and ensured in strength, as shown in Figs. 1 and 2, in one embodiment, an installation support 10 includes at least two carbon-fiber vertical frames 200 and two aluminum-alloy horizontal frames 100. In the present embodiment, the carbon-fiber vertical frames 200 are made of carbon fiber, and the aluminum-alloy horizontal frames 100 are made of aluminum alloy. The carbon-fiber vertical frames 200 are arranged with distance intervals in sequence, one end of each carbon-fiber vertical frame 200 is connected to one aluminum-alloy horizontal frame 100, and the other end of each carbon-fiber vertical frame 200 is connected to the other aluminum-alloy horizontal frame. In the present embodiment, the two aluminum-alloy horizontal frames 100 are configured to bear heavy objects, and the carbon-fiber vertical frames 200 are configured to bear the force exerted by one of the aluminum-alloy horizontal frames 100 toward or away from the other aluminum-alloy horizontal frame 100.

In the present embodiment, a number of the carbon-fiber vertical frames 200 is two, and the two carbon-fiber vertical frames 200 and the two aluminum-alloy horizontal frames 100 are connected to each other to form a rectangular frame. Specifically, the two carbon-fiber vertical frames 200 include a first carbon-fiber vertical frame 210 and a second carbon-fiber vertical frame 220, and the two aluminum-alloy horizontal frames 100 include a first aluminum-alloy horizontal frame 101 and a second aluminum-alloy horizontal frame 102. The first carbon-fiber vertical frame 210, the first aluminum-alloy horizontal frame 101, the second carbon-fiber vertical frame 220 and the second aluminum-alloy horizontal frame 102 are sequentially connected, and the second aluminum-alloy horizontal frame 102 is connected to the first carbon-fiber vertical frame 210, forming a rectangular frame. Specifically, the first end of the first carbon-fiber vertical frame 210 is connected to the first end of the first aluminum-alloy horizontal frame 101; the second end of the first carbon-fiber vertical frame 210 is connected to the first end of the second aluminum-alloy horizontal frame 102; the first end of the second carbon-fiber vertical frame 220 is connected to the second end of the first aluminum-alloy horizontal frame 101; and the second end of the second carbon-fiber vertical frame 220 is connected to the second end of the second aluminum-alloy horizontal frame 102.

Referring to Figs. 1 and 2, the aforementioned installation supports 10 have the same strength in all directions of the aluminum-alloy horizontal frame 100 regarding each installation support 10. The aluminum-alloy horizontal frame 100 is suitable for bearing heavy objects. The aluminum-alloy horizontal frame 100 is not easy to break under gravity when mounting heavy objects. Additionally, the aluminum-alloy material is precise in manufacturing reproduction, and can be repeatedly processed to ensure the accuracy of the aluminum-alloy horizontal frame 100. When the two aluminum-alloy horizontal frames 100 of the two installation supports 10 are mounted, the two aluminum-alloy horizontal frames 100 can be matched with each other more accurately. The bearing strength is high of the carbon-fiber vertical frame 200 in one direction, so that the carbon-fiber vertical frame 200 can be configured for bearing the force exerted by one of the aluminum-alloy horizontal frames 100 towards or away from the other aluminum-alloy horizontal frame 100. A good bearing effect is thus achieved. The weight of the carbon fiber material is comparatively lower than that of the aluminum-alloy, so that the overall weight of the installation support is lighter and the strength is higher.

In one embodiment, the length of the aluminum-alloy horizontal frame is greater than its width, and the length of the carbon-fiber vertical frame is greater than its width. The aluminum-alloy horizontal frame has a higher strength in the width direction, thus being suitable for bearing the force in the width direction. While the carbon-fiber vertical frame has higher strength in the length direction, thus being suitable for bearing the force in the length direction, thus ensuring the strength of the installation support. In the present embodiment, the width direction of the aluminum-alloy horizontal frame may also be referred to as radial direction.

It should be appreciated that, compared with the installation supports are integrally provided with carbon-fibers, the aluminum-alloy horizontal frame of the present application can better ensure the manufacturing accuracy, further ensure the installation accuracy when a plurality of installation supports matches to cooperate. This arrangement can ensure the stress intensity when the installation support bears a heavy objects. Compared with the related installation support which is integrally provided with aluminum-alloy, the carbon-fiber vertical frame of the present disclosure has higher strength and makes the entire installation support lighter. Therefore, the installation support of the present disclosure has a lighter entire weight and a higher bearing strength.

It should be appreciated that the number of the carbon-fiber vertical frames may be two or more, and in one embodiment, the number of the carbon-fiber vertical frames is three. In one embodiment, the number of carbon-fiber vertical frames is four. The number of carbon-fiber vertical frames improves the overall carrying capacity of entire carbon-fiber vertical frames and increases the cost of the support installation. Therefore, the number of carbon-fiber vertical frames should depend on the actual practice.

In order to improve the strength of the carbon-fiber vertical frame 200 , as shown in Figs. 1 and 2, in one embodiment, the carbon-fiber vertical frame 200 is provided in a cylindrical shape. That is, the carbon-fiber vertical frame 200 is a hollow cylinder. The carbon-fiber vertical frame 200 arranged in a cylindrical shape has high strength in the axial direction, so as to better carry the force exerted by one of the aluminum-alloy horizontal frames 100 toward or away from the other one of the aluminum-alloy horizontal frames 100. Specifically, the cross-section is circular of the carbon-fiber vertical frame 200. The cylindrical carbon-fiber vertical frame 200 can uniformly distribute stress to the surface of the carbon-fiber vertical frame 200, so that the strength of the carbon-fiber vertical frame 200 is higher. In another embodiment, the cross section of the carbon-fiber vertical frame is a quadrangular prism, and the carbon-fiber vertical frame is hollow. Namely, the carbon-fiber vertical frame is arranged as a hollow quadrangular prism. In another embodiment, the cross-sectional is polygonal of the carbon-fiber vertical frame, and the carbon-fiber vertical frame is hollow.

In order to install the carbon-fiber vertical frame, in one embodiment, each of the aluminum-alloy horizontal frames is provided with at least two installation grooves corresponding one-to-one to the carbon-fiber vertical frames. One end of each carbon-fiber vertical frame is inserted into one of the installation grooves on one aluminum-alloy horizontal frame. And the other end of each carbon-fiber vertical frame is inserted into another one of the installation grooves of the other aluminum-alloy horizontal frame. The carbon-fiber vertical frame is inserted into the installation groove, so that the carbon-fiber vertical frame is limited and fixed through the side wall of the installation groove, implementing the connection between the carbon-fiber vertical frame and the aluminum-alloy horizontal frame. As shown in Fig. 2, in the present embodiment, the first aluminum-alloy horizontal frame 101 is provided with two first installation grooves 103, and the second aluminum-alloy horizontal frame 102 is provided with two second installation grooves 104. Each of the first installation grooves 103 is correspondingly arranged with one of the second installation grooves 104. One end of each the carbon-fiber vertical frame 200 is inserted into one of the first installation grooves 103, and the other end is inserted into one of the second installation grooves 104, so that the carbon-fiber vertical frames 200 are connected to the aluminum-alloy horizontal frame 100.

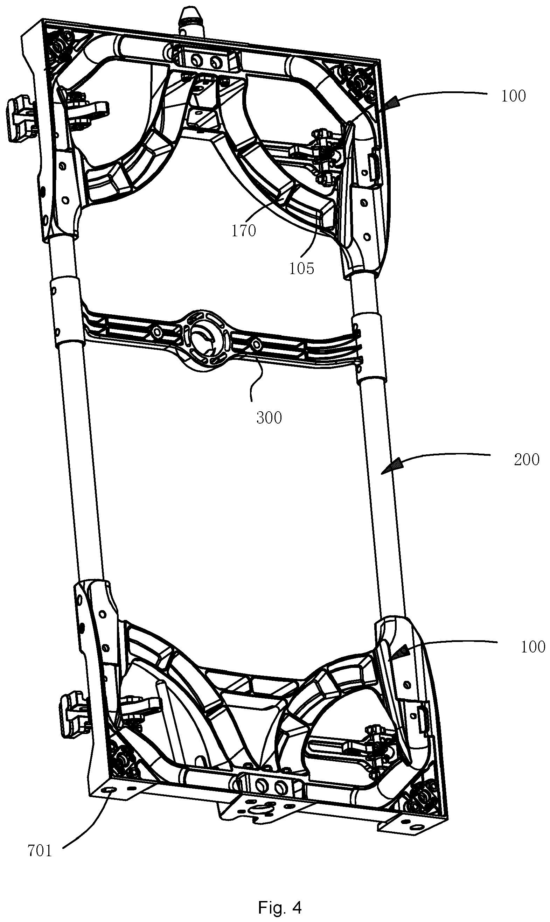

In order to make the aluminum-alloy horizontal frame 100 lighter, as shown in Fig. 4, in one embodiment, each of the aluminum-alloy horizontal frames 100 is provided with a groove 105. In the present embodiment, each of the aluminum-alloy horizontal frames 100 is provided with a groove 105 at a position far away from the carbon-fiber vertical frame 200. Specifically, one side of the aluminum-alloy horizontal frame 100 is provided with a groove 105, and the side adjacent to the groove 105 of the aluminum-alloy horizontal frame 100 is connected to the carbon-fiber vertical frame 200. The groove 105 is configured for reducing the weight of the aluminum-alloy horizontal frame 100, and the aluminum-alloy horizontal frame 100 is lighter.

In order to ensure the strength of the aluminum-alloy horizontal frame 100 after the groove 105 is provided, as shown in Fig. 4, in one embodiment, a reinforcing rib 170 is provided in the groove 105, and both ends of the reinforcing rib 170 are respectively connected to two side walls of the groove 105. Thus, both ends of the reinforcing rib 170 are respectively connected to two opposite side walls of the groove 105. As such, the reinforcing ribs 170 can support the two side walls of the groove 105 to prevent the side walls of the groove 105 from deforming in facing or opposite directions. The strength is ensured of the aluminum-alloy horizontal frame 100 after the groove 105 is provided. In the present embodiment, the reinforcing rib 170 is further connected to the bottom of the groove 105, thereby further increasing the strength of the aluminum-alloy horizontal frame 100.

In order to increase the strength of the aluminum-alloy horizontal frame 100, as shown in Figs. 1 and 2, in one embodiment, each of the aluminum-alloy horizontal frames 100 includes a first frame 110, a second frame 120, a third frame 130, a first supporting beam 140 and a second supporting beam 150. One end of the first frame 110 is connected to one end of the second frame 120, and the other end of the first frame 110 is connected to the third frame 130. One end of the second frame 120 away from the first frame 110 is connected to the carbon-fiber vertical frame 200, and one end of the third frame 130 away from the first frame 110 is connected to the other carbon-fiber vertical frame 200. One end of the first supporting beam 140 is connected to the position of the first frame 110 away from the second frame 120, and the other end of the first supporting beam 140 is connected to the position of the second frame 120 away from the first frame 110. One end of the second supporting beam 150 is connected to a position of the first frame 110 away from the third frame 130, and the other end of the second supporting beam 150 is connected to a position of the third frame 130 away from the first frame 110. When the first frame 110 is stressed, the stress on the first frame 110 is distributed to the second frame 120 through the first supporting beam 140, and the stress on the first frame 110 is distributed to the third frame 130 through the second supporting beam 150, so that the first frame 110 can bear higher stress.

In one embodiment, the length of the first frame is greater than its width, and the length direction of the first frame is perpendicular to the length direction of the carbon-fiber vertical frame, so that the first frame is not vulnerable to break under the force in the width direction. In the present embodiment, the length direction of the first frame is perpendicular to the axial direction of the carbon-fiber vertical frame, so that the first frame is not vulnerable to break under the force in the width direction.

In order to realize the inter-connection of the first frame, the second frame, the third frame, the first supporting beam and the second supporting beam, in one embodiment, the first frame 110, the second frame 120, the third frame 130, the first supporting beam 140 and the second supporting beam 150 are integrally formed, thereby realizing the connection of the first frame, the second frame, the third frame, the first supporting beam and the second supporting beam. In another embodiment, the first frame, the second frame, the third frame, the first supporting beam and the second supporting beam are welded. In some another embodiment, the first frame, the second frame, the third frame, the first supporting beam and the second supporting beam are connected by threads.

As shown in Figs. 1 and 2, in one embodiment, the first supporting beam 140 is arranged curved, bending towards the joint of the first frame 110 and the second frame 120. So the axial direction of the first supporting beam 140 near one end of the first frame 110 tends to be perpendicular to the axial direction of the first frame 110. That is, the angle is tends to be smaller between the axial direction of the first supporting beam 140 close to one end of the first frame 110 and the radial direction of the first frame 110. And the radial force of the first frame 110 are executed on the first supporting beam, and are better distributed along the first supporting beam 140. Additionally, the force of the first supporting beam 140 near one end of the second frame 120 is distributed to the radial direction of the second frame 120. As such, the stress tolerance of the aluminum-alloy horizontal frame 100 increases. The second supporting beam 150 has a similar principle as the first supporting beam 140, which enables the stress on the first frame 110 to be better distributed to the third frame 130.

In order to maintain the objects hung on the installation support 10 more conveniently, as shown in Figs. 1 and 2, in one embodiment, the installation support 10 further includes a climbing frame 300. The climbing frame 300 is respectively connected to the at least two of the carbon-fiber vertical frames 200, and the climbing frame 300 is connected to the carbon-fiber vertical frames 200 at a position far away from its ends. The climbing frame 300 is convenient for a user to climb to the installation support 10, thereby enabling the maintenance of the objects hung on the installation support 10 conveniently.

In order to ensure the radial strength of the climbing frame, in one embodiment, the climbing frame is made of aluminum alloy which has better strength in all directions, and makes climbing operation safer.

In order to connect the climbing frame 300 with at least two carbon-fiber vertical frames 200 at positions far away from the ends of the carbon-fiber vertical frames, as shown in Fig. 2, specifically, the climbing frame 300 includes a frame body 310, a first connecting part 320 and a second connecting part 330. The first connecting part 320 is provided with a first connecting hole 321 and a first pin hole 322. The first pin hole is formed through the inner surface and the outer surface of the first connecting part 320, and is communicated with the first connecting hole 321. The second connecting part 330 is formed with a second connecting hole 331 and a second pin hole (not shown). The second pin hole is formed through the inner surface and the outer surface of the second connecting part 330, and is communicated with the second connecting hole 331. One end of the frame body 310 is connected to the outer side of the first connecting part 320, with the other end connected to the outer side of the second connecting part 330. The first carbon-fiber vertical frame 210 is provided with a third pin hole 202, and the second carbon-fiber vertical frame 220 is provided with a fourth pin hole (not shown). The first carbon-fiber vertical frame 210 is provided with the first connecting hole 321 that is passed through the first carbon-fiber vertical frame 210, and the second carbon-fiber vertical frame 220 is provided with a second connecting hole 331 that is passed through the second carbon-fiber vertical frame 220. A first pin shaft 420 is arranged in the first pin hole 322 and the third pin hole 202, and a second pin shaft (not shown) is arranged in the second pin hole and the fourth pin hole, so that the climbing frame 300 is respectively connected to the at least two carbon-fiber vertical frames 200 at positions far away from the ends of the carbon-fiber vertical frames 200.

Specifically, the first pin shaft 420 is abutted against the side wall of the first pin hole 322, the first pin shaft 420 is also abutted against the side wall of the third pin hole 202. The second pin shaft is abutted against the side wall of the second pin hole, and the second pin shaft is also abutted against the side wall of the fourth pin hole. The first connecting part and the first carbon-fiber vertical frame are fixed through the first pin shaft, and the second connecting part and the second carbon-fiber vertical frame are fixed through the second pin shaft, so that the connection between the climbing frame and the carbon-fiber vertical frame is stable.

In order to install the display screen, in one embodiment, as shown in Fig. 1, the climbing frame 300 is further provided with a back buckle hole 301 configured for installing the display screen.

In order to increase the bearing ability of the installation support, as shown in Figs. 1 and 2, in one embodiment, the two aluminum-alloy horizontal frames 100 at both ends of the carbon-fiber vertical frame 200 are symmetrically arranged. The symmetrically arranged aluminum-alloy horizontal frames 100 have similar stressing conditions, so that the stress is evenly distributed on the two aluminum-alloy horizontal frames 100, and the installation support 10 can bear higher stress.

In order to more conveniently climb the installation support 10, as shown in Figs. 1 and 2, in one embodiment, each of the aluminum-alloy horizontal frames 100 is respectively provided with a supporting surface 161, the supporting surface 161 is perpendicular to the axial direction of the carbon-fiber vertical frame 200. The two supporting surfaces 161 of the two aluminum-alloy horizontal frames 100 face the same direction. In real practice, the supporting surface 161 is arranged in a direction away from the ground, and the axial direction of the carbon-fiber vertical frame is parallel to the gravity direction. A user can climb with the supporting surface 161 as a supporting point. Specifically, the aluminum-alloy horizontal frame 100 further includes a fourth frame 160, one end of which is connected to the first supporting beam 140, the other end of which is connected to the second supporting beam 150. The fourth frame 160 is provided with the supporting surface 161.

In order to realize the connection between the carbon-fiber vertical frame 200 and the aluminum-alloy horizontal frame 100, as shown in Fig. 2, in one embodiment, the installation support 10 further comprises a fixing shaft 410. The carbon-fiber vertical frame 200 is provided with a first through hole 201, and the aluminum-alloy horizontal frame 100 is provided with a second through hole 121. The fixing shaft 410 is penetrated through the first through hole 201 and the second through hole 121. Specifically, the fixing shaft 410 is abutted against the side wall of the first through hole 201, and the fixing shaft 410 is also abutted against the side wall of the second through hole 121. Thus, the carbon-fiber vertical frame 200 and the aluminum-alloy horizontal frame 100 are connected. The surface of the fixing shaft 410 is in contact with the side wall of the first through hole 201 and the side wall of the second through hole 121, so that the carbon-fiber vertical frame 200 and the aluminum-alloy horizontal frame 100 cannot be separated from each other.

The connection between the carbon-fiber vertical frame 200 and the aluminum-alloy horizontal frame 100 becomes more compact.

Specifically, the second through hole is penetrated through the inner side surface and the outer side surface of the aluminum-alloy, and the second through hole is communicated with the installation groove. The carbon-fiber vertical frame is inserted into the installation groove. And the fixing shaft is penetrated through the first through hole and the second through hole, to enable the connection between the carbon-fiber vertical frame and the aluminum-alloy horizontal frame. In the present embodiment, the second through hole 121 is communicated with the first installation groove 103.

In one embodiment, the fixed shaft, the first pin shaft and the second pin shaft are all made of stainless steel. That is, the fixed shaft is a stainless steel fixed shaft, the first pin shaft is a first stainless steel pin shaft, and the second pin shaft is a second stainless steel pin shaft. Rusting is prevented of the fixed shaft, the first pin shaft and the second pin shaft and further the joint of the installation support becomes more stable.

In one of the embodiments, It is further proposed a display device including a display screen and the installation support described in any of the above embodiments. The display screen is connected to the aluminum-alloy horizontal frame.

In one embodiment, one end of the display screen is connected to one of the aluminum-alloy horizontal frames at the length direction of the display screen, while the other end of the display screen is connected to another one of the aluminum-alloy horizontal frames. With respect to the width direction of the display screen, the distance between the two aluminum-alloy horizontal frames is larger than the width of the display screen. So that the display screen can be conveniently disassembled and passed through the installation support, providing convenience to the back maintenance.

In one embodiment, the distance between the climbing frame and one aluminum-alloy horizontal frame is larger than the width of the display screen, so that the display screen can pass between the climbing frame and the aluminum-alloy horizontal frame, and the climbing frame can conveniently be climbed for the support installation. Back maintenance can also been performed conveniently on the display screen.

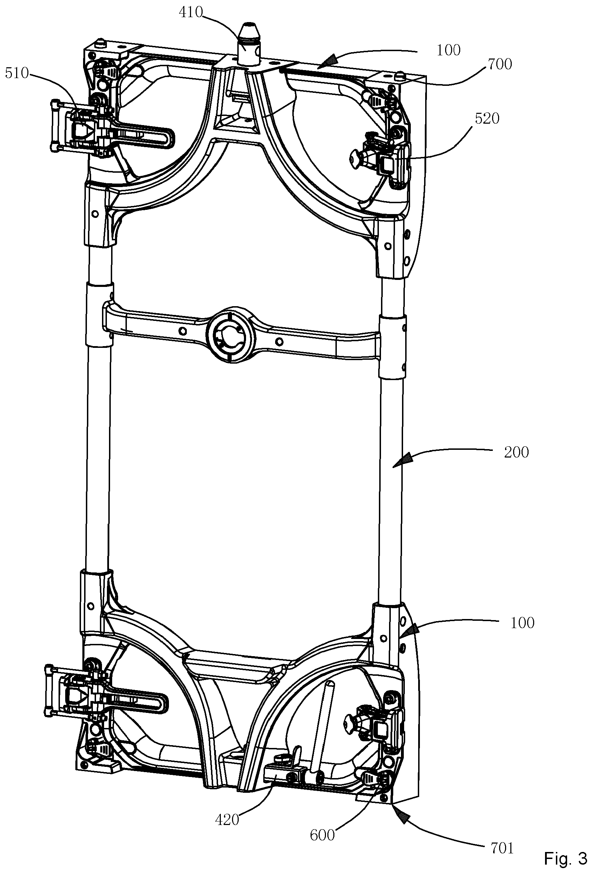

In order to facilitate the connection between the two frame bodies 310, Figs. 3 and 4 are referred to. In one embodiment of the installation support 10, one end of the aluminum-alloy horizontal frame 100 away from the carbon-fiber vertical frame 200 is provided with a positioning shaft 700, while the other end of the aluminum-alloy horizontal frame 100 away from the carbon-fiber vertical frame 200 is provided with positioning opening 701. At least two mounting frames 10 are provided, and the positioning shaft 700 of one of the installation support 10 is inserted into the positioning opening 701 of the other installation support 10. The positioning shaft 700 is inserted into the positioning opening, so that the two installation supports 10 are positioned with each other. As such, the connection is more convenient between the aluminum-alloy horizontal frames 100 of the two installation supports 10. In one embodiment, at least two positioning shafts and two positioning openings are provided, respectively. The positioning shafts and the positioning openings are arranged in one-to-one correspondence, so that the two installation supports are better positioned through a plurality of positioning shafts. Relative rotation of the two installation supports is avoided. In one embodiment, the positioning opening is a positioning groove, and the positioning shaft is accommodated in the positioning groove. Specifically, the side wall of the positioning groove is abutted against the positioning shaft, so that the positioning between the two installation supports is more accurate.

As shown in Fig. 3, in one embodiment, one end of the aluminum-alloy horizontal frame 100 of each of the installation supports 10 away from the carbon-fiber vertical frame 200 is provided with a lifting lock cylinder 710, and the other end of the aluminum-alloy horizontal frame 100 away from the carbon-fiber vertical frame 200 is provided with a lifting lock cylinder 720. When the two installation supports 10 are connected in the first direction, the lock cylinder of one of the installation supports 10 is connected to the lock cylinder of the other installation support 10, thereby connecting the a plurality of installation supports 10 in the first direction.

As shown in Fig. 3, in one embodiment, one side of the aluminum-alloy horizontal frame 100 of each of the installation supports 10 is provided with an arc buckling rod 510, and the other side of the aluminum-alloy horizontal frame 100 of each of the installation supports 10 is provided with an arc buckling piece 520. When two installation supports 10 are connected in the second direction, the arc buckling rod 510 of one of the installation supports 10 is connected to the arc buckling piece 520 of the other installation support 10, thereby connecting the plurality of installation supports 10 in the second direction. In the present embodiment, the first direction and the second direction are perpendicular to each other.

As shown in Fig. 3, in one embodiment, the installation support 10 is further provided with a display screen fixing lock 600 for connection with the display screen.

The technical features of the aforementioned embodiments can be combined at will. In order to simplify the description, not all possible combinations of the technical features of the aforementioned embodiments have been described. However, as long as no contradiction exists between in the combination of these technical features, they should be considered as the scope recorded in the present disclosure.

The aforementioned examples describes several optional embodiments of the present disclosure with specific details, but they should not be construed as a limitation to the scope of present disclosure. It should be appreciated that for those skilled in the art, possible modifications and improvements can be made without departing from the concept of the present disclosure, which should be considered as falling within the protection scope of the present disclosure. Therefore, the scope of protection of the present disclosure patent shall be subject to the appended claims.

## Claims

1. An installation support (10) for a display screen, comprising:
at least two carbon-fiber vertical frames (200, 210, 220), and
two aluminum-alloy horizontal frames (100, 101, 102),
each of the carbon-fiber vertical frames (200, 210, 220) being spaced in sequence,
one end of each carbon-fiber vertical frame (200, 210, 220) being connected to one of the aluminum-alloy horizontal frames (100, 101, 102), and
the other end of each carbon-fiber vertical frame (200, 210, 220) being connected to the other aluminum-alloy horizontal frame (100, 101, 102),
each of the aluminum-alloy horizontal frames (100, 101, 102) comprises a first frame (110), a second frame (120), a third frame (130), a first supporting beam (140) and a second supporting beam (150),
one end of the first frame (110) being connected to one end of the second frame (120),
the other end of the first frame (110) being connected to the third frame (130),
an end of the second frame (120) away from the first frame (110) being connected to one carbon-fiber vertical frame (200, 210, 220),
an end of the third frame (130) away from the first frame (110) being connected to another carbon-fiber vertical frame (200, 210, 220),
an end of the first supporting beam (140) being connected to a position of the first frame (110) away from the second frame (120),
the other end of the first supporting beam (140) being connected to a position of the second frame (120) away from the first frame (110),
an end of the second supporting beam (150) being connected to a position of the first frame away from the third frame (130), and
the other end of the second supporting beam (150) being connected to a position of the third frame away from the first frame (110), **characterized in that**
the first supporting beam (140) is arranged curved, bending towards a joint of the first frame (110) and the second frame (120),
the second supporting beam (150) is arranged curved, bending towards a joint of the first frame (110) and the third frame (130),
the first supporting beam (140) and the second supporting beam (150) are interconnected through a horizontal beam at bending curves of the first supporting beam (140) and the second supporting beam (150).

2. The installation support (10) according to claim 1, wherein
the carbon-fiber vertical frame (200, 210, 220) is cylindrical.

3. The installation support (10) according to claim 1 or claim 2, wherein
each of the aluminum-alloy horizontal frames (100, 101, 102) defines at least two installation grooves (103, 104) corresponding one-to-one to the carbon-fiber vertical frames (200, 210, 220),
one end of each carbon-fiber vertical frame (200, 210, 220) being inserted into one of the installation grooves (103, 104) on one aluminum-alloy horizontal frame (100, 101, 102), and
the other end of each carbon-fiber vertical frame (200, 210, 220) being inserted into another one of the installation grooves (103, 104) of the other aluminum-alloy horizontal frame (100, 101, 102).

4. The installation support (10) according to any one of claim 1 to claim 3, wherein
each aluminum-alloy horizontal frame (100, 101, 102) defines a groove (105).

5. The installation support (10) according to claim 4, wherein
the groove (105) is configured to receive a reinforcing rib (170), and two ends of the reinforcing rib (170) are respectively connected to two side walls of the groove (105).

6. The installation support (10) according to claim 1, wherein
a length of the first frame (110) is greater than a width of the first frame (110), and
a length direction of the first frame (110) is perpendicular to a length direction of the carbon-fiber vertical frame (200, 210, 220).

7. The installation support (10) according to any one of claim 1 to claim 6, further comprising a climbing frame (300),
the climbing frame (300) being respectively connected to at least two carbon-fiber vertical frames (200, 210, 220) at positions away from ends of the carbon-fiber vertical frames (200, 210, 220).

8. The installation support (10) according to claim 7, wherein
the climbing frame (300) comprises a frame body (310), a first connecting part (320) and a second connecting part (330),
one end of the frame body (310) being connected with the first connecting part (320),
the other end of the frame body (310) being connected with the second connecting part (330),
the first connecting part (320) being connected with one of the carbon-fiber vertical frames (200, 210, 220), and
the second connecting part (330) being connected with another one of the carbon-fiber vertical frame (200, 210, 220).

9. The installation support (10) according to claim 8, wherein
the first connecting part (320) is provided with a first connecting hole (321) and a first pin hole (322);
the first pin hole (322) is formed through the inner surface and the outer surface of the first connecting part (320), and is communicated with the first connecting hole (321);
the second connecting part (330) is formed with a second connecting hole (331) and a second pin hole (332);
the second pin hole (332) is formed through the inner surface and the outer surface of the second connecting part (330), and is communicated with the second connecting hole (331);
a first pin shaft (420) is arranged in the first pin hole (322) and a third pin hole (202); and
a second pin shaft is arranged in the second pin hole (332) and the fourth pin hole.

10. The installation support (10) according to claim 8, wherein
the first pin shaft (420) is abutted against the side wall of the first pin hole (322) ;
the first pin shaft (420) is abutted against the side wall of the third pin hole (202) ;
the second pin shaft is abutted against the side wall of the second pin hole;
and the second pin shaft is abutted against the side wall of the fourth pin hole.

11. The installation support (10) according to any one of claim 1 to claim 10, further comprising a fixing shaft (410);
the carbon-fiber vertical frame (200, 210, 220) defines a first through hole (201);
the aluminum-alloy horizontal frame (100, 101, 102) defines second through hole (121),
the fixing shaft (410) penetrating through the first through hole (201) and the second through hole (121).

12. The installation support (10) according to any one of claims 1 to 11, wherein
each of the aluminum-alloy horizontal frames (100, 101, 102) comprises a supporting surface (161) perpendicular to an axial direction of the carbon-fiber vertical frame (200, 210, 220), and
the two supporting surfaces (161) of the two aluminum-alloy horizontal frames (100, 101, 102) are positioned in a same direction.

13. A display device, comprising a display screen and the installation support (10) according to any one of claims 1-12, the display screen being connected to the aluminum-alloy horizontal frame (100, 101, 102).

## Patentansprüche

1. Installationsträger (10) für einen Anzeigebildschirm, umfassend:
mindestens zwei vertikale Kohlefaserrahmen (200, 210, 220) und
zwei horizontale Aluminiumlegierungsrahmen (100, 101, 102),
wobei jeder der vertikalen Kohlefaserrahmen (200, 210, 220) nacheinander beabstandet ist,
wobei ein Ende jedes vertikalen Kohlefaserrahmens (200, 210, 220) mit einem der horizontalen Aluminiumlegierungsrahmen (100, 101, 102) verbunden ist, und
wobei das andere Ende jedes vertikalen Kohlefaserrahmens (200, 210, 220) mit dem anderen horizontalen Aluminiumlegierungsrahmen (100, 101, 102) verbunden ist,
wobei jeder der horizontalen Aluminiumlegierungsrahmens (100, 101, 102) einen ersten Rahmen (110), einen zweiten Rahmen (120), einen dritten Rahmen (130), einen ersten Stützbalken (140) und einen zweiten Stützbalken (150) umfasst,
wobei ein Ende des ersten Rahmens (110) mit einem Ende des zweiten Rahmens (120) verbunden ist,
wobei das andere Ende des ersten Rahmens (110) mit dem dritten Rahmen (130) verbunden ist,
wobei ein vom ersten Rahmen (110) entferntes Ende des zweiten Rahmens (120) mit einem vertikalen Kohlefaserrahmen (200, 210, 220) verbunden ist,
wobei ein vom ersten Rahmen (110) entferntes Ende des dritten Rahmens (130) mit einem anderen vertikalen Kohlefaserrahmen (200, 210, 220) verbunden ist,
wobei ein Ende des ersten Stützbalkens (140) mit einer vom zweiten Rahmen (120) entfernten Position des ersten Rahmens (110) verbunden ist,
wobei das andere Ende des ersten Stützbalkens (140) mit einer vom ersten Rahmen (110) entfernten Position des zweiten Rahmens (120) verbunden ist,
wobei ein Ende des zweiten Stützbalkens (150) mit einer von dem dritten Rahmen (130) entfernten Position des ersten Rahmens verbunden ist, und
wobei das andere Ende des zweiten Stützbalkens (150) mit einer von dem ersten Rahmen (110) entfernten Position des dritten Rahmens verbunden ist,
**dadurch gekennzeichnet, dass**
der erste Stützbalken (140) gekrümmt angeordnet ist und sich in Richtung einer Verbindung zwischen dem ersten Rahmen (110) und dem zweiten Rahmen (120) biegt,
wobei der zweite Stützbalken (150) gekrümmt angeordnet ist und sich in Richtung einer Verbindung zwischen dem ersten Rahmen (110) und dem dritten Rahmen (130) biegt,
wobei der erste Stützbalken (140) und der zweite Stützbalken (150) durch einen horizontalen Balken an Biegekurven des ersten Stützbalkens (140) und des zweiten Stützbalkens (150) miteinander verbunden sind.

2. Installationsträger (10) nach Anspruch 1, wobei der vertikale Kohlefaserrahmen (200, 210, 220) zylindrisch ist.

3. Installationsträger (10) nach Anspruch 1 oder Anspruch 2, wobei jeder der horizontalen Aluminiumlegierungsrahmen (100, 101, 102) mindestens zwei Montagenuten (103, 104) definiert, die eins zu eins mit den vertikalen Kohlefaserrahmen (200, 210, 220) übereinstimmen,
wobei ein Ende jedes vertikalen Kohlefaserrahmens (200, 210, 220) in eine der Montagenuten (103, 104) an einem horizontalen Aluminiumlegierungsrahmen (100, 101, 102) eingesetzt wird, und
wobei das andere Ende jedes vertikalen Kohlefaserrahmens (200, 210, 220) in das andere der Montagenuten (103, 104) des anderen horizontalen Aluminiumlegierungsrahmens (100, 101, 102) eingesetzt wird.

4. Installationsträger (10) nach einem der Ansprüche 1 bis 3, wobei jeder horizontale Aluminiumlegierungsrahmen (100, 101, 102) eine Nut (105) definiert.

5. Installationsträger (10) nach Anspruch 4, wobei die Nut (105) zur Aufnahme einer Verstärkungsrippe (170) ausgebildet ist und zwei Enden der Verstärkungsrippe (170) jeweils mit zwei Seitenwänden der Nut (105) verbunden sind.

6. Installationsträger (10) nach Anspruch 1, wobei eine Länge des ersten Rahmens (110) größer als eine Breite des ersten Rahmens (110) ist, und
wobei eine Längsrichtung des ersten Rahmens (110) rechtwinklig zu einer Längsrichtung des vertikalen Kohlefaserrahmens (200, 210, 220) ist.

7. Installationsträger (10) nach einem der Ansprüche 1 bis 6, ferner umfassend einen Kletterrahmen (300),
wobei der Kletterrahmen (300) jeweils mit mindestens zwei vertikalen Kohlefaserrahmen (200, 210, 220) an Positionen entfernt von Enden der vertikalen Kohlefaserrahmens (200, 210, 220) verbunden ist.

8. Installationsträger (10) nach Anspruch 7, wobei der Kletterrahmen (300) einen Rahmenkörper (310), ein erstes Verbindungsteil (320) und ein zweites Verbindungsteil (330) umfasst,
wobei ein Ende des Rahmenkörpers (310) mit dem ersten Verbindungsteil (320) verbunden ist,
wobei das andere Ende des Rahmenkörpers (310) mit dem zweiten Verbindungsteil (330) verbunden ist,
wobei das erste Verbindungsteil (320) mit einem der vertikalen Kohlefaserrahmen (200, 210, 220) verbunden ist, und
wobei das zweite Verbindungsteil (330) mit einem anderen der vertikalen Kohlefaserrahmen (200, 210, 220) verbunden ist.

9. Installationsträger (10) nach Anspruch 8, wobei das erste Verbindungsteil (320) mit einem ersten Verbindungsloch (321) und einem ersten Stiftloch (322) versehen ist;
wobei das erste Stiftloch (322) durch die Innenfläche und die Außenfläche des ersten Verbindungsteils (320) hindurch ausgebildet ist und mit dem ersten Verbindungsloch (321) in Verbindung steht;
wobei das zweite Verbindungsteil (330) mit einem zweiten Verbindungsloch (331) und einem zweiten Stiftloch (332) versehen ist;
wobei das zweite Stiftloch (332) durch die Innenfläche und die Außenfläche des zweiten Verbindungsteils (330) hindurch ausgebildet ist und mit dem zweiten Verbindungsloch (331) in Verbindung steht;
wobei ein erster Stiftschaft (420) in dem ersten Stiftloch (322) und einem dritten Stiftloch (202) angeordnet ist; und
wobei ein zweiter Stiftschaft in dem zweiten Stiftloch (332) und dem vierten Stiftloch angeordnet ist.

10. Installationsträger (10) nach Anspruch 8, wobei der erste Stiftschaft (420) gegen die Seitenwand des ersten Stiftlochs (322) stößt; wobei der erste Stiftschaft (420) gegen die Seitenwand des dritten Stiftlochs (202) stößt; wobei der zweite Stiftschaft gegen die Seitenwand des zweiten Stiftlochs stößt; und der zweite Stiftschaft gegen die Seitenwand des vierten Stiftlochs stößt.

11. Installationsträger (10) nach einem der Ansprüche 1 bis 10, ferner umfassend einen Befestigungsschaft (410);
wobei der vertikale Kohlefaserrahmen (200, 210, 220) ein erstes Durchgangsloch (201) definiert;
wobei der horizontale Aluminiumlegierungsrahmen (100, 101, 102) ein zweites Durchgangsloch (121) definiert,
wobei der Befestigungsschaft (410) das erste Durchgangsloch (201) und das zweite Durchgangsloch (121) durchdringt.

12. Installationsträger (10) nach einem der Ansprüche 1 bis 11, wobei jeder der horizontalen Aluminiumlegierungsrahmen (100, 101, 102) eine Stützfläche (161) senkrecht zu einer axialen Richtung des vertikalen Kohlefaserrahmens (200, 210, 220) aufweist, und
wobei die beiden Stützfläche (161) der beiden horizontalen Aluminiumlegierungsrahmen (100, 101, 102) in dieselbe Richtung weisen.

13. Anzeigevorrichtung mit einem Anzeigebildschirm und dem Installationsträger (10) nach einem der Ansprüche 1-12, wobei der Anzeigebildschirm mit dem horizontalen Aluminiumlegierungsrahmen (100, 101, 102) verbunden ist.

## Revendications

1. Support d'installation (10) pour un écran de visualisation, comprenant :
au moins deux châssis verticaux en fibre de carbone (200, 210, 220), et
deux châssis horizontaux en alliage d'aluminium (100, 101, 102),
chacun des châssis verticaux en fibre de carbone (200, 210, 220) étant espacé en séquence,
une extrémité de chaque châssis vertical en fibre de carbone (200, 210, 220) étant connectée à l'un des châssis horizontaux en alliage d'aluminium (100, 101, 102), et
l'autre extrémité de chaque châssis vertical en fibre de carbone (200, 210, 220) étant connectée à l'autre châssis horizontal en alliage d'aluminium (100, 101, 102),
chacun des châssis horizontaux en alliage d'aluminium (100, 101, 102) comprend un premier châssis (110), un deuxième châssis (120), un troisième châssis (130), une première poutre de support (140) et une deuxième poutre de support (150),
une extrémité du premier châssis (110) étant connectée à une extrémité du deuxième châssis (120),
l'autre extrémité du premier châssis (110) étant connectée au troisième châssis (130),
une extrémité du deuxième châssis (120) éloignée du premier châssis (110) étant connectée à un châssis vertical en fibre de carbone (200, 210, 220),
une extrémité du troisième châssis (130) éloignée du premier châssis (110) étant connectée à un autre châssis vertical en fibre de carbone (200, 210, 220),
une extrémité de la première poutre de support (140) étant connectée à une position du premier châssis (110) éloignée du deuxième châssis (120),
l'autre extrémité de la première poutre de support (140) étant connectée à une position du deuxième châssis (120) éloignée du premier châssis (110),
une extrémité de la deuxième poutre de support (150) étant connectée à une position du premier châssis éloignée du troisième châssis (130), et
l'autre extrémité de la deuxième poutre de support (150) étant connectée à une position du troisième châssis éloignée du premier châssis (110), **caractérisé en ce que**,
la première poutre de support (140) est disposée en courbe, fléchissant vers une jonction entre le premier châssis (110) et le deuxième châssis (120),
la deuxième poutre de support (150) est disposée en courbe, fléchissant vers une jonction entre le premier châssis (110) et le troisième châssis (130),
la première poutre de support (140) et la deuxième poutre de support (150) sont connectées l'une à l'autre par une poutre horizontale au niveau des courbes fléchissant de la première poutre de support (140) et de la deuxième poutre de support (150).

2. Support d'installation (10) selon la revendication 1, dans lequel,
les châssis verticaux en fibre de carbone (200, 210, 220) sont cylindriques.

3. Support d'installation (10) selon la revendication 1 ou 2, dans lequel,
chacun des châssis horizontaux en alliage d'aluminium (100, 101, 102) délimite au moins deux rainures d'installation (103, 104) correspondant un à un aux châssis verticaux en fibre de carbone (200, 210, 220),
une extrémité de chaque châssis vertical en fibre de carbone (200, 210, 220) étant insérée dans l'une des rainures d'installation (103, 104) sur un châssis horizontal en alliage d'aluminium (100, 101, 102), et
l'autre extrémité de chaque châssis vertical en fibre de carbone (200, 210, 220) étant insérée dans une autre des rainures d'installation (103, 104) de l'autre châssis horizontal en alliage d'aluminium (100, 101, 102).

4. Support d'installation (10) selon l'une quelconque des revendications 1 à 3, dans lequel,
chaque châssis horizontal en alliage d'aluminium (100, 101, 102) délimite une rainure (105).

5. Support d'installation (10) selon la revendication 4, dans lequel,
la rainure (105) est configurée pour recevoir une nervure de renfort (170), et deux extrémités de la nervure de renfort (170) sont respectivement connectées à deux parois latérales de la rainure (105).

6. Support d'installation (10) selon la revendication 1, dans lequel,
une longueur du premier châssis (110) est supérieure à une largeur du premier châssis (110), et
une direction de longueur du premier châssis (110) est perpendiculaire à une direction de longueur du châssis vertical en fibre de carbone (200, 210, 220).

7. Support d'installation (10) selon l'une quelconque des revendications 1 à 6, comprenant en outre un châssis d'escalade (300),
le châssis d'escalade (300) étant respectivement connecté à au moins deux châssis verticaux en fibre de carbone (200, 210, 220) dans positions éloignées des extrémités des châssis verticaux en fibre de carbone (200, 210, 220).

8. Support d'installation (10) selon la revendication 7, dans lequel,
le châssis d'escalade (300) comprend un corps de châssis (310), une première portion de connexion (320) et une deuxième portion de connexion (330),
une extrémité du corps de châssis (310) étant connectée à la première portion de connexion (320),
l'autre extrémité du corps de châssis (310) étant connectée à la deuxième portion de connexion (330),
la première portion de connexion (320) étant connectée à l'un des châssis verticaux en fibre de carbone (200, 210, 220), et
la deuxième portion de connexion (330) étant connectée à un autre du châssis vertical en fibre de carbone (200, 210, 220).

9. Support d'installation (10) selon la revendication 8, dans lequel,
la première portion de connexion (320) est pourvue d'un premier trou de connexion (321) et d'un premier trou d'épingle (322) ;
le premier trou d'épingle (322) est formé à travers la surface intérieure et la surface extérieure de la première portion de connexion (320), et est en communication avec le premier trou de connexion (321) ;
la deuxième portion de connexion (330) est formée avec un deuxième trou de connexion (331) et un deuxième trou d'épingle (332) ;
le deuxième trou d'épingle (332) est formé à travers la surface intérieure et la surface extérieure de la deuxième portion de connexion (330), et est en communication avec le deuxième trou de connexion (331) ;
un premier arbre d'épingle (420) est disposé dans le premier trou d'épingle (322) et un troisième trou d'épingle (202) ; et
un deuxième arbre d'épingle est disposé dans le deuxième trou d'épingle (332) et le quatrième trou d'épingle.

10. Support d'installation (10) selon la revendication 8, dans lequel,
le premier arbre d'épingle (420) s'appuie contre la paroi latérale du premier trou d'épingle (322) ;
le premier arbre d'épingle (420) s'appuie contre la paroi latérale du troisième trou d'épingle (202) ;
le deuxième arbre d'épingle s'appuie contre la paroi latérale du deuxième trou d'épingle ; et
le deuxième arbre d'épingle s'appuie contre la paroi latérale du quatrième trou d'épingle.

11. Support d'installation (10) selon l'une quelconque des revendications 1 à 10, comprenant en outre un axe de fixation (410) ;
le châssis vertical en fibre de carbone (200, 210, 220) délimitant un premier trou traversant (201) ;
le châssis horizontal en alliage d'aluminium (100, 101, 102) délimitant un deuxième trou traversant (121),
et l'arbre de fixation (410) pénétrant à travers le premier trou traversant (201) et le deuxième trou traversant (121).

12. Support d'installation (10) selon l'une quelconque des revendications 1 à 11, dans lequel,
chacun des châssis horizontaux en alliage d'aluminium (100, 101, 102) comprend une surface de support (161) perpendiculaire à une direction axiale du châssis vertical en fibre de carbone (200, 210, 220), et
les deux surfaces d'appui (161) des deux châssis horizontaux en alliage d'aluminium (100, 101, 102) sont disposées dans une même direction.

13. Dispositif de visualisation, comprenant un écran de visualisation et le support d'installation (10) selon l'une quelconque des revendications 1 à 12, l'écran de visualisation étant connecté au châssis horizontal en alliage d'aluminium (100, 101, 102).
